# EUROPÄISCHE PATENTSCHRIFT

(11) **EP 0 819 371 B1**
(45) Veröffentlichungstag und Bekanntmachung des Hinweises auf die Patenterteilung: **31.10.2001**
(21) Anmeldenummer: 97111309.7
(22) Anmeldetag: 04.07.1997
(51) Int. Cl.: A01D 41/12

(54) **Behälter einer Erntemaschine**
Harvester bin
Trémie d'une machine de récolte

(30) Priorität: 18.07.1996 DE 19629001
(43) Veröffentlichungstag der Anmeldung: 21.01.1998
(73) Patentinhaber: DEERE & COMPANY, Moline, Illinois 61265-8098 (US)
(72) Erfinder: Hirsch, Walter J., 66459 Kirkel/Limbach (DE); Cain, Darryl F., Moline, Illinois 61265 (US)
(74) Vertreter: Magin, Ludwig Bernhard

(56) Entgegenhaltungen:
- EP-A- 0 098 327
- EP-A- 0 458 032
- DE-A- 4 120 731
- DE-C- 4 333 558
- GB-A- 2 296 175
- US-A- 5 427 572

## Beschreibung

Die Erfindung betrifft einen Behälter einer Erntemaschine, insbesondere Korntank eines Mähdreschers, mit einer unteren Behälterwandung und einem Aufbau zur wahlweisen Vergrößerung des Behältervolumens, wobei der Aufbau wenigstens ein schwenkbeweglich an die Oberseite der Behälterwandung angeschlossenes Abschlußelement aufweist.

Die EP-A1-0 098 327 offenbart einen Mähdrescher mit einem Korntank, der auf seiner Oberseite von zwei Deckeln verschlossen wird, die um sich in der Fahrtrichtung erstreckende Gelenkachsen vertikal schwenkbar sind. An der Vorder- und Rückseite der Deckel sind vertikal verlaufende und im wesentlichen dreiecksförmige Stirnflächen angebracht, die sich gegenseitig überlappen und eine sich beim Anheben der Deckel ergebende vordere und rückwärtige Öffnung verschließen.

Aus dem Prospekt "DEUTZ-FAHR TOPLINER, Druckvermerk 91 513 01 - 9510" ist ein Mähdrescher mit einem Korntank bekannt, an dessen Oberseite ein Deckel schwenkbar angeschlossen ist, von dem aus sich nach unten einstückige Stirnwände erstrecken. Auf einem Teil ihrer Höhe sind die Stirnwände mit einer sich quer dazu erstreckenden Wand verbunden.

Das der Erfindung zugrunde liegende Problem wird darin gesehen, daß der Korntank für Wartungszwecke nur noch schwer zugänglich ist und das Eintauchen der Stirnflächen in den Korntank voraussetzt, daß dort keine störenden Einbauten vorhanden sind.

Dieses Problem wird erfindungsgemäß durch die Lehre des Patentanspruchs 1 bzw. 8 gelöst, wobei in den weiteren Patentansprüchen Merkmale aufgeführt sind, die die Lösung in vorteilhafter Weise weiterentwickeln.

Auf diese Weise kann im angehobenen Zustand der Abschlußelemente eine der Teilstirnwände soweit weggeschwenkt werden, daß sich im Bereich der Stirnwand eine Öffnung ergibt, die ausreichend groß ist, damit eine Person in den Behälter gelangen kann. Wenn beim Absenken der Abschlußelemente die Teilstirnwände auf ein Hindernis in dem Behälter treffen, können sie sich zusammenschieben und behindern somit nicht die Abwärtsbewegung des Abschlußelements. Diese Konstruktion führt auch dazu, daß bei abgesenkten Abschlußelementen auch eine aus Teilstirnwänden zusammengeschobene Stirnwand in den Behälter paßt, die ein Aufklappen der Abschlußelemente sogar über einen Weg von mehr als 90 Grad zuläßt.

Wenn die Teilstirnwände an den betreffenden Endkanten mit Bördelungen, Falzen oder dergleichen versehen sind, die beim Anheben der Abschlußelemente ineinandergreifen, bilden die mehreren Teilstirnwände eine dichte Gesamtfläche, durch die kein Gut austreten kann.

Mit der Hilfe von Ketten, Seilen, Gestängen, Bördelungen oder dergleichen, die die Teilstirnwände miteinander verbinden, werden untere Teilstirnwände bei einer Aufwärtsbewegung mitgenommen.

Das Vorsehen einer auf einem großen Kreis oder einer ähnlichen Krümmung verlaufenden Stirnkante einer Stirnwand, auf der das andere Abschlußelement aufliegen kann, ermöglicht es, das zweite Abschlußelement aufgrund seiner Auflage mit dem ersten anzuheben, so daß es nicht mehrerer Stellvorrichtungen bedarf.

Aneinander anliegende Stirnkanten der Abschlußelemente bewirken, daß bei abgesenkten Abschlußelementen eine geschlossene Decke entsteht, so daß weder Staub aus dem Behälter austreten noch bei schlechtem Wetter Regenwasser eindringen kann. Die Stirnkanten können sowohl direkt oder über Dichtlippen oder jede Art von Dichtungen aneinander zur Anlage kommen.

Die Verwendung einer Gleitführung mit einer Führungsbahn zwischen beiden Stirnwänden gewährleistet, daß die Teilstirnwände eine in sich stabile und dichte Fläche ergeben und - je nach Ausbildung - die Teilstirnwände eine erzwungene Bewegung ausführen.

Eine motorische, insbesondere elektromotorische, Verstellung der Abschlußelemente, gegebenenfalls abhängig von der Füllhöhe in dem Behälter, anstelle einer Bewegung aufgrund des Staudrucks in dem Behälter verhindert, daß diese auf dem Schüttgut in dem Behälter aufliegen und dieses beschädigen.

Nach einer anderen nicht dargestellen Ausführungsform der Erfindung, bei der deren Vorteile ebenfalls voll zum Tragen kommen, ist nur ein Abschlußelement vorgesehen, wie dies an sich aus dem Prospekt "Deutz-Fahr Topliner" bekannt ist. Auch wenn nur ein Abschlußelemement mit wenigstens einer Stirnwand vorgesehen ist, kann diese nahezu beliebig groß ausgebildet werden und kollidiert nicht mit Einbauten in dem Behälter, wenn die fächerförmige Ausbildung gewählt wird. Bei vollkommen angehobenem Abschlußelement können die Teilstirnwände soweit zusammengeschoben werden, daß sich eine Öffnung für den Einstieg in den Behälter ergibt.

Wenn eine die Teilstirnwände überbrückende Wand vorgesehen ist, der gegenüber die Teilstirnwände beweglich sind oder die ebenfalls fächerförmig ausgebildet ist, ist der Aufsatz insgesamt geschlossen und verhindert den Austritt von Schüttgut wie auch das Eindringen von Wasser.

Im übrigen können diese Teilstirnwände und Abschlußelemente genauso vorteilhaft weitergebildet werden, wie die Teilstirnwände und Abschlußelemente nach der ersten Ausführungsform.

In der Zeichnung ist ein nachfolgend näher beschriebenes Ausführungsbeispiel der Erfindung dargestellt. Es zeigt:
- Fig. 1: eine Erntemaschine mit einem erfindungsgemäßen Behälter in Seitenansicht und
- Fig. 2: den Behälter in Vorderansicht.

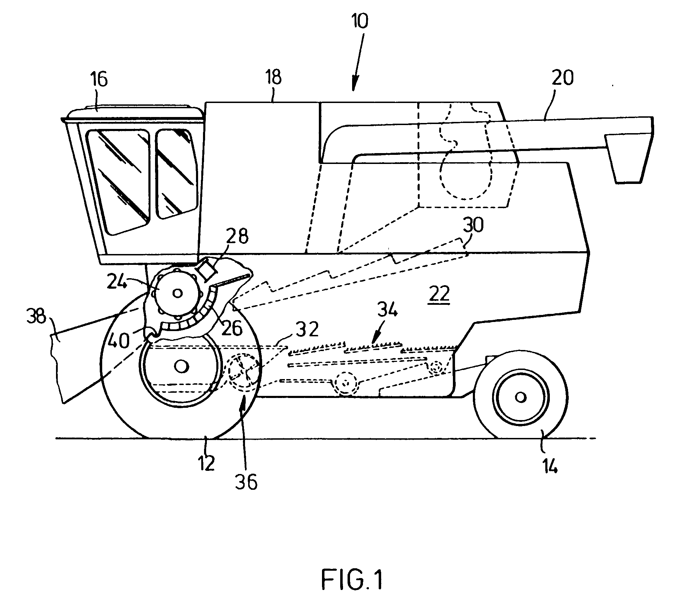

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso ein Baumwollpflücker, ein Karottenernter, ein Kartoffel- oder Rübenvollernter oder dergleichen in Frage kommen. An die Fahrerkabine 16 schließt sich rückwärtig ein Behälter 18 an, der in ihn abgegebenes Gut über ein Entleerrohr 20 nach außen abgeben kann. Der Behälter 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Behälter 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

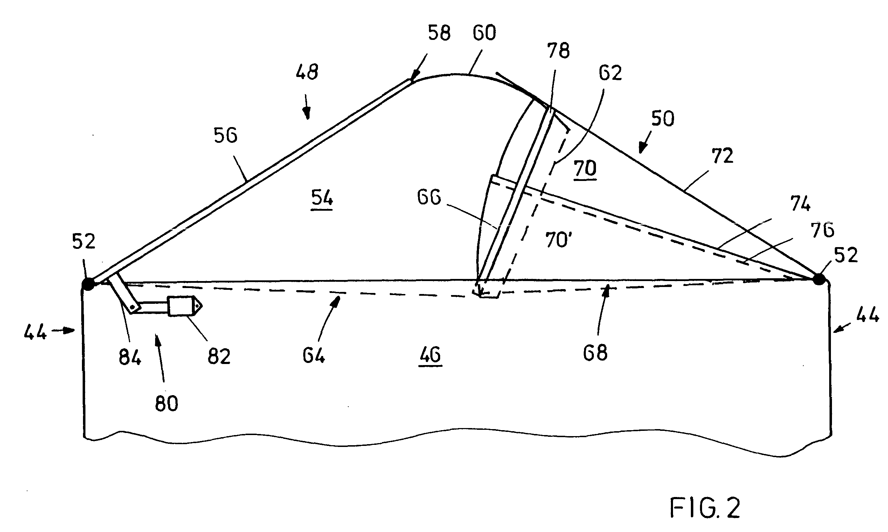

Der Behälter 18 setzt sich aus einem in der Zeichnung nicht zu erkennenden Boden und einer unteren Behälterwandung 42 zusammen, die aus zwei Seitenwänden 44, von denen in Figur 1 nur die in Fahrtrichtung linke zu sehen ist, einer Vorderwand 46, die in Figur 2 gezeigt ist, und einer ebenfalls nicht dargestellten Rückwand zusammen, die mit der Vorderwand 46 vorzugsweise deckungsgleich ist.

Die Seitenwände 44, die Vorderwand 46 und die Rückwand erstrecken sich jedenfalls im wesentlichen vertikal und umschließen einen ca. 8.000 Liter fassenden Raum. Die Seitenwände 44, die Vorderwand 46 und die Rückwand enden auf derselben Höhe und sind aus Festigkeitsgründen in bekannter Weise mit Streben, Sicken und dergleichen versehen.

Im folgenden wird auf das in Figur 2 Gezeigte verwiesen.

Nach Figur 2 ist ein erstes und ein zweites Abschlußelement 48 und 50 vorgesehen, die jeweils über eine Schwenkverbindung 52 an der Oberseite der Seitenwände 44 gelenkig angreifen. Abweichend hiervon könnten die Abschlußelemente 48, 50 auch an der Vorder- und der Rückwand 46 gelenkig angreifen. Aufgrund der Schwenkverbindungen 52 können die Abschlußelemente 48 vertikal verschwenkt werden.

Beide Abschlußelemente 48, 50 sind bei diesem Ausführungsbeispiel vorteilhafterweise so ausgebildet, daß sie im abgesenkten und auf der Oberseite der Seitenwände 44, der Vorderwand 46 und der Rückwand aufliegenden Zustand die Öffnung des Behälters 18 verschließen. Auf diese Weise wird der Behälter 18 jedenfalls im wesentlichen verschlossen; dies ist jedoch nicht zwingend, sondern lediglich vorteilhaft.

Das erste Abschlußelement 48 ist im Bereich der Vorderwand 46 und der Rückwand mit jeweils einer Stirnfläche 54 versehen, die im wesentlichen einstückig ausgebildet ist. Figur 2, die die Abschlußelemente 48, 50 in ihrer bei diesem Ausführungsbeispiel obersten Stellung zeigt, macht deutlich, daß sich die Stirnwand 54 von der Unterseite des ersten Abschlußelements 48 bis unterhalb der Oberkante der Vorderwand 46 bzw. der Rückwand und bis unterhalb des zweiten Abschlußelements 50 erstreckt. Auf diese Weise wird ein Großteil des Spaltes zwischen der Oberkante der Vorderwand 46 bzw. der Rückwand und dem ersten Abschlußelement 48 verschlossen, so daß in diesem Bereich kein in dem Behälter 18 befindliches Erntegut austreten kann.

Es ist aus Figur 2 zu ersehen, daß ein Deckel 56 des ersten Abschlußelements 48 in einer vorderen, oberen Stirnkante 58 endet und daß sich eine Stirnkante 60 der Stirnwand 54 auf einem Kreisbogen bis unter das zweite Abschlußelement 50 erstreckt. Nach dem Ende des Kreisbogens, der über ca. 90 Winkelgrade verläuft, schließt sich ein gerader Abschnitt 62 bis unterhalb der Oberkante der Vorderwand 46 bzw. der Rückwand - bei angehobenem ersten Abschlußelement 48 - an, der fast unter einem rechten Winkel in einen zweiten geraden Abschnitt 64 übergeht, der an der Schwenkverbindung 52 endet. Der Deckel 56 ragt wenigstens vorne und hinten über die Öffnung des Behälters 18 nach außen und legt sich somit auf die Vorder- und Rückwand 46 der unteren Behälterwandung 42 auf.

Eine Stirnwand 68 des zweiten Abschlußelements 50 ist aus mehreren Teilstirnwänden 70 und 70' zusammengesetzt, die insgesamt den Spalt zwischen der Oberkante der Vorderwand 46 bzw. der Rückwand und dem zweiten Abschlußelement 50 nunmehr auf der mit Blick auf Figur 2 rechten Seite verschließen. Abweichend von dem Ausführungsbeispiel könnten auch mehr als zwei Teilstirnwände 70, 70' vorgesehen werden, die es schließlich ermöglichen, daß ein Deckel 72 des zweiten Abschlußelements 50 in der angehobenen Stellung eine vertikale oder gar nach außen gerichtete Lage einnimmt, die zu einer maximalen Volumenvergrößerung des Behälters 18 führt.

Der Deckel 72 liegt wie aus Figur 2 ersichtlich stets auf der Stirnkante 60 in dem Kreisbogenabschnitt der Stirnwand 54 auf und gleitet bei deren Schwenkbewegung auf diesem. Auch der Deckel 72 legt sich in der abgesenkten Stellung des Abschlußelements 50 auf die Vorder- und Rückwand 46 auf.

Beide Teilstirnwände 70, 70' sind in der Form eines Dreiecks ausgebildet und zeigen mit ihrem spitzen Winkel von ca. 15 Grad zu den Schwenkverbindungen 52.

Die erste Teilstirnwand 70 ist starr an die Unterseite des zweiten Abschlußelements 50 bzw. dessen Deckel 72 angeschlossen und bewegt sich zwangsweise mit diesem. Die dem Deckel 72 abgelegene untere Endkante der ersten Teilstirnwand 70 ist außen nach oben gebördelt und endet somit mit einer U-förmigen Bördelung 74.

Die zweite Teilstirnwand 70' ist an der in Figur 2 rechts gelegenen Seitenwand 44 vertikal schwenkbar angelenkt und gegenüber der ersten Teilstirnwand 70 vertikal beweglich; sie sind im wesentlichen deckungsgleich. Die obere Endkante läuft in einer nach innen und unten gekröpften Bördelung 76 aus, die in die Bördelung 74 der ersten Teilstirnwand 70 eingreifen kann.

Die in der vorteilhaften Ausführungsform dargestellten und beschriebenen Bördelungen 74, 76 sind nur beispielhaft dargestellt und nicht unbedingt erforderlich.

Anstelle der Bördelungen 74, 76 könnten auch Ketten, Seile, Stangen oder dergleichen Verbindungselemente zwischen den Teilstirnwänden 70, 70' vorgesehen werden, die bewirken, daß sich die Bewegung der einen Teilstirnwand 70 auf die andere Teilstirnwand 70' überträgt. Wenn andere Mittel, z. B. Feder oder dergleichen vorgesehen sind, die die unteren Teilstirnwände 70' stets nach oben drücken, bedarf es einer Verbindung zwischen den Teilstirnwänden 70, 70' gar nicht.

Wenn die Teilstirnwände 70, 70' flach aufeinander liegen bzw. gleiten bedarf es keiner Bördelungen 74, 76, um Dichtigkeit zu erzeugen. Sollten aus anderen Gründen Spalte bestehen, kann auch eine oder mehrere Dichtung(en) zwischen den Stirnwänden 54, 68 und oder den Teilstirnwänden 70, 70' vorgesehen werden.

Die Teilstirnwände 70, 70' können zur Versteifung mit Sicken, Falzen oder Kröpfungen versehen werden.

Die Anordnung der Stirnwand 54 und der Teilstirnwände 70, 70' ist so getroffen, daß vom Behälterinnern aus betrachtet zunächst die Stirnwand 54, dann die untere Teilstirnwand 70' und schließlich die obere Teilstirnwand 70 kommt.

Es ist aus Figur 2 zu entnehmen, daß im angehobenen Zustand des zweiten Abschlußelements 50 die zweite Teilstirnwand 70' bis unter die Oberkante der Vorder- bzw. Rückwand 46 reicht und somit den Behälter 18 verschließt. Es ist ferner zu erkennen, daß sich die Teilstirnwände 70, 70' und die erste Stirnwand 54 teilweise überlagern, so daß auch zwischen beiden Stirnwänden 54, 68 kein Spalt entsteht.

Im wesentlichen parallel zu dem ersten geraden Abschnitt 62 und mit Abstand zu der Stirnwand 68 verläuft eine Gleitführung 66 mit einer Führungsbahn. Die Gleitführung 66 wird von einem auf die Außenseite der zweiten Stirnwand 68 aufgesetzten Flacheisen oder sonstigen länglichen Profil gebildet, das zu dieser einen Abstand wahrt und in diesem Abstand die beiden Teilstirnwände 70, 70' gleitbeweglich aufnimmt. Diese Gleitführung 66 stellt sicher, daß sich beide Stirnwände 54, 68 nicht unter der Last des in dem Behälter 18 gelagerten Schüttguts voneinander wegbewegen. Es ist ausreichend, wenn das Flacheisen nur an dem Deckel 72 angebracht ist und an der Innenseite der Vorder- und Rückwand 46 entlanggleitet.

Figur 2 zeigt desweiteren eine Stellvorrichtung 80 mit einem Motor 82 und einem Schwenkarm 84.

Die Stellvorrichtung 80 kann sowohl willkürlich von einer Bedienungsperson oder über einen nicht gezeigten Sensor betätigt werden und dient dazu, die Abschlußelemente 48, 50 zwischen einer Stellung, in der die Deckel 56, 72 auf der Behälterwandung 42 aufliegen und den Behälter 18 verschließen, und einer Stellung zu bewegen, in der die Abschlußelemente 48, 50 eine nach innen geneigte (sh. Fig. 2), eine senkrechte oder gar nach außen geneigte Stellung einnehmen.

Je nach den anzutreffenden Größenverhältnissen ist eine vorne, in der Mitte oder hinten angeordnete Stellvorrichtung 80 ausreichend oder es bedarf mehrerer. Solange - wie in Figur 2 dargestellt - der Deckel 72 des zweiten Abschlußelements 50 auf der Stirnkante 60 der Stirnwände 54, 68 des ersten Abschlußelements 48 aufliegt und somit das zweite Abschlußelement 50 von dem ersten mitverstellt wird, reicht es aus, wenn die Stellvorrichtung 80 nur an dem ersten Abschlußelement 48 angreift; anderenfalls müßte die Stellvorrichtung 80 auch direkt auf das zweite Abschlußelement 50 wirken.

Der Motor 82 kann als Elektro-, Hydraulik- oder Pneumatikmotor ausgebildet sein. Vorzugsweise wird ein Elektromotor mit einer Gewindespindel verwendet, da dieser leicht anzusteuern ist, wenig Energie benötigt und auch nicht die Gefahr von Leckagen in sich birgt.

Der Stellarm 82 greift in diesem Ausführungsbeispiel starr an dem ersten Abschlußelement 48 und rechtwinklig oder nahezu rechtwinklig zu dessen Haupterstreckungsebene an und überträgt die Bewegung des Motors 82 auf das erste Abschlußelement 48, das sich um die Achse der Schwenkverbindung 52 bewegt.

## Patentansprüche

1. Behälter (18) einer Erntemaschine (10), insbesondere Korntank eines Mähdreschers, mit einer unteren Behälterwandung und einem Aufbau zur wahlweisen Vergrößerung des Behältervolumens, wobei der Aufbau zwei schwenkbeweglich an die Oberseite der Behälterwandung angeschlossene, sich gegenüberliegende Abschlußelemente (48, 50) aufweist, die quer zu den Schwenkachsen verlaufende, sich überlappende Stirnwände (54, 68) enthalten, **dadurch gekennzeichnet, daß** wenigstens eine der Stirnwände (54, 68) aus mehreren fächerartig miteinander verbundenen Teilstirnwänden (70, 70') zusammengesetzt ist.

2. Behälter nach Anspruch 1, **dadurch gekennzeichnet, daß** die Teilstirnwände (70, 70') an in Öffnungsstellung einander zugelegenen Kanten mit ineinandergreifenden Bördelungen (74, 76) versehen sind.

3. Behälter nach Anspruch 1 oder 2, **dadurch gekennzeichnet, daß** die Teilstirnflächen (70, 70') über Ketten, Seile, Gestänge, Bördelungen (74, 76) oder dergleichen miteinander verbunden sind.

4. Behälter nach einem oder mehreren der vorherigen Ansprüche, **dadurch gekennzeichnet, daß** eine dem gegenüberliegenden Abschlußelement (50) zugelegene Stirnkante (60) einer Stirnwand (54) oder Teilstirnwand (70, 70') auf einem Bogen, insbesondere einer Kreislinie, verläuft.

5. Behälter nach einem oder mehreren der vorherigen Ansprüche, **dadurch gekennzeichnet, daß** die Stirnkanten (58) von Deckeln (56, 72) der Abschlußelemente (48, 50) in einem abgesenkten Zustand mittelbar oder unmittelbar aneinander zur Anlage gelangen.

6. Behälter nach einem oder mehreren der vorherigen Ansprüche, **dadurch gekennzeichnet, daß** eine Stirnwand (68) eines Abschlußelements (50) eine Gleitführung (66) mit einer Führungsbahn für die anliegenden Teilstirnwände (70, 70') aufweist.

7. Behälter nach einem oder mehreren der vorherigen Ansprüche, **dadurch gekennzeichnet, daß** wenigstens eine der Stirn- oder Teilstirnwände (54, 68, 70, 70') motorisch verstellbar ist.

8. Behälter (18) einer Erntemaschine (10), insbesondere Korntank eines Mähdreschers, mit einer unteren Behälterwandung und einem Aufbau zur wahlweisen Vergrößerung des Behältervolumens, wobei der Aufbau ein schwenkbeweglich an die Oberseite der Behälterwandung angeschlossenes Abschlußelement (50) aufweist, das quer zu der Schwenkachse verlaufende Stirnwände (68) enthält, **dadurch gekennzeichnet, dass** wenigstens eine der Stirnwände (68) aus mehreren fächerartig miteinander verbundenen Teilstirnwänden (70, 70') zusammengesetzt ist.

9. Behälter nach Anspruch 8, **dadurch gekennzeichnet, daß** eine an dem Abschlußelement (50) angebrachte und den Abstand zwischen den Stirnwänden (68) bzw. Teilstirnwänden (70, 70') überbrückende Wand vorgesehen ist.

10. Behälter nach Anspruch 9, **dadurch gekennzeichnet, daß** die Wand aus mehreren fächerartig miteinander verbundenen Teilwänden zusammengesetzt ist.

11. Behälter nach einem oder mehreren der vorherigen Ansprüche 8 bis 10, **gekennzeichnet durch** die kennzeichnenden Merkmale der Patentansprüche 2, 3, 5 und 6.

## Claims

1. A container (18) of a harvester (10), especially a grain tank of combine harvester, with lower container walling and a structure for selectively enlarging the container volume, wherein the structure comprises two closure elements (48, 50) opposite one another and pivotally attached to the upper side of the container walling, which elements have overlapping end walls (54, 68) running transverse to the pivotal axes, **characterized in that** at least one of the end walls (54, 68) is composed of a plurality of part end walls (70, 70') connected to one another like a fan.

2. A container according to claim 1, **characterized in that** the part end walls (70, 70') have edges coming together in the open position which are provided with inter-engaging lips (74, 76).

3. A container according to claim 1 or 2, **characterized in that** the end surface parts (70, 70') are connected to one another by chains, cables, linkages, lips (74, 76) or the like.

4. A container according to one or more of the preceding claims, **characterized in that** an end edge (60) of one end wall (54) or part end wall (70, 70') facing the opposite closure element (50) runs along an arc, especially of a circle.

5. A container according to one or more of the preceding claims, **characterized in that** the end edges (58) of covers (56, 72) of the closure elements (48, 50) come in to indirect or direct abutment with one another in a lowered state.

6. A container according to one or more of the preceding claims, **characterized in that** one end wall (68) of one closure element (50) has a slide guide (66) with a guide-way for the part end walls (70, 70') bearing thereon.

7. A container according to one or more of the preceding claims, **characterized in that** at least one of the end walls or part end walls (54, 68, 70, 70') can be adjusted by motor.

8. A container (18) of a harvester (10), especially a grain tank of combine harvester, with lower container walling and a structure for selectively enlarging the container volume, wherein the structure comprises a closure element (50) pivotally attached to the upper side of the container walling, which element has end walls (68) running transverse to the pivotal axis, **characterized in that** at least one of the end walls (68) is composed of a plurality of part end walls (70, 70') connected to one another like a fan.

9. A container according to claim 8, **characterized in that** a wall is provided, fitted to the closure element (50) and bridging over the space between the end walls (68) or part end walls (70, 70').

10. A container according to claim 9, **characterized in that** the wall is composed of a plurality of part walls connected to one another like a fan.

11. A container according to one or more of the preceding claims 8 to 10, **characterized by** the characterizing features of claims 2, 3, 5 and 6.

## Revendications

1. Trémie (18) d'une moissonneuse (10), notamment cuve à grains d'une moissonneuse-batteuse, comportant une paroi inférieure de trémie et une superstructure servant à augmenter à volonté le volume de la trémie, la superstructure comportant deux éléments de fermeture réciproquement en vis-à-vis (48, 50), qui sont raccordés avec possibilité de déplacement au côté supérieur de la paroi de la trémie et contiennent des parois frontales (54, 68) qui se chevauchent et s'étendent transversalement par rapport aux axes de pivotement, **caractérisée en ce qu'**au moins l'une des parois frontales (54, 68) est formée par la réunion de plusieurs éléments (70, 70') de paroi frontale reliés entre eux sous la forme d'un éventail.

2. Trémie selon la revendication 1, **caractérisée en ce que** les éléments de paroi frontale (70, 70') sont pourvus, au niveau de bords qui se font face dans la position d'ouverture, de rebords (74, 76), qui s'engagent l'un dans l'autre.

3. Trémie selon la revendication 1 ou 2, **caractérisée en ce que** les éléments de paroi frontale (70, 70') sont reliées entre eux par l'intermédiaire de chaînes, de câbles, de tringleries, de rebords (74, 76) ou analogues.

4. Trémie selon une ou plusieurs des revendications précédentes, **caractérisée en ce qu'**un bord frontal (60) tourné vers l'élément de fermeture opposé (50), d'une paroi frontale (54) ou d'un élément de paroi frontale (70, 70') s'étend sur un arc, notamment sur une ligne circulaire.

5. Trémie selon une ou plusieurs des revendications précédentes, **caractérisée en ce que** les bords frontaux (58) de couvercles (56, 72) des éléments de fermeture (48, 50) viennent s'appliquer directement ou indirectement l'un contre l'autre dans un état abaissé.

6. Trémie selon une ou plusieurs des revendications précédentes, **caractérisée en ce qu'**une paroi frontale (68) d'un élément de fermeture (50) comporte un guide à coulissement (68) comportant une voie de guidage pour les éléments de paroi latérale (70, 70').

7. Trémie selon une ou plusieurs des revendications précédentes, **caractérisée en ce qu'**au moins l'une des parois frontales ou l'un des éléments de paroi frontaux (54, 68, 70, 70') est réglable de façon motorisée.

8. Trémie (18) d'une moissonneuse (10), notamment cuve à grains d'une moissonneuse-batteuse, comportant une paroi inférieure de trémie et une superstructure servant à augmenter à volonté le volume de la trémie, la superstructure comportant un élément de fermeture (50), qui est raccordé avec possibilité de déplacement au côté supérieur de la paroi de la trémie et contient des parois frontales (68) qui se chevauchent et s'étendent transversalement par rapport aux axes de pivotement, **caractérisée en ce qu'**au moins l'une des parois frontales (68) est formée par la réunion de plusieurs éléments de paroi frontale (70, 70') reliés entre eux en forme d'éventail.

9. Trémie selon la revendication 8, **caractérisée en ce qu'**il est prévu une paroi, qui est montée sur l'élément de fermeture (50) et franchit la distance entre les paroi frontale (68) ou les éléments de parois frontales (70, 70').

10. Trémie selon la revendication 9, **caractérisée en ce que** la paroi est constituée par la réunion de plusieurs éléments de paroi reliés entre eux en forme d'éventail.

11. Trémie selon une ou plusieurs des revendications précédentes 8 à 10, **caractérisée** en par les parties caractéristiques des revendications 2, 3, 5 et 6.
